**Europäisches Patentamt**

**European Patent Office**

**Office européen des brevets**

(11) Veröffentlichungsnummer: **0 334 957**

**A1**

## EUROPÄISCHE PATENTANMELDUNG
### veröffentlicht nach Art. 158 Abs. 3 EPÜ

(21) Anmeldenummer: **87907639.6**

(22) Anmeldetag: **25.08.87**

(86) Internationale Anmeldenummer:
**PCT/SU87/00094**

(87) Internationale Veröffentlichungsnummer:
**WO 89/01735 (09.03.89 89/06)**

(51) Int. Cl.⁴: **A01F 7/06 , A01F 12/26**

(43) Veröffentlichungstag der Anmeldung:
**04.10.89 Patentblatt 89/40**

(84) Benannte Vertragsstaaten:
**DE FR GB IT**

(71) Anmelder: **GOLOVNOE SPETSIALIZIROVANNOE KONSTRUKTORSKOE BJURO PO MASHINAM DLYA UBORSKI ZERNOVYKH KULTUR I SAMOKHODNYM SHASSI**
ul. Instrumentalnaya, 2 Rostovskaya obl.
**Taganrog, 347928(SU)**

(72) Erfinder: **YARMASHEV, Jury Nikolaevich**
**1-i Krepostnoi per., 34-213**
Rostovskaya obl. Taganrog, 347922(SU)
Erfinder: **ZAPANDI, Vladimir Arturovich**
ul. Svobody, 24/2-37 Rostovskaya obl.
**Taganrog, 347902(SU)**
Erfinder: **TKACHEV, Valentin Nikitovich**
ul. Svobody, 27/2-1 Rostovskaya obl.
**Taganrog, 347902(SU)**
Erfinder: **ZHURKIN, Vladimir Kuzmich**
**VIK, 10-54 Moskovskaya obl.**
p/o Lugovaya, 141740(SU)

(74) Vertreter: **Finck, Dieter et al**
**Patentanwälte v. Füner, Ebbinghaus, Finck**
**Mariahilfplatz 2 & 3**
**D-8000 München 90(DE)**

(54) **DRESCHVORRICHTUNG FÜR MÄHDRESCHER IM AXIALFLUSSBAUART.**

(57) Die Erfindung bezieht sich auf den Landmaschinenbau.

Das Wesen der Erfindung besteht darin, daß der Dreschkorb (4) eines Dreschwerkes aus mehreren selbständigen Abschnitten (5 und 6) ausgeführt ist, die sich beidseits der Längsachse eines Rotors (1) befinden. Dabei ist der in der Umlaufrichtung des Rotors (1) erste Abschnitt (5) des Dreschkorbes (4) in bezug auf den zweiten Abschnitt (6) starr befestigt, während der zweite Abschnitt (6) in bezug auf den ersten Abschnitt (5) angelenkt ist und eine Vorrichtung (7) zur Regelung des Dreschspaltes am Austritt hat.

Am effektivsten kann das erfindungsgemäße Dreschwerk beim Ernten von Ährengrasern verwendet werden.

FIG.2

## DRESCHWERK EINES AXIAL-MÄHDRESCHERS

### Technisches Gebiet

Die vorliegende Erfindung bezieht sich auf den Landmaschinenbau und betrifft insbesondere Dreschwerke, die in Axial-Mähdreschern eingesetzt werden.

Am effektivsten kann die vorliegende Erfindung beim Ernten von verschiedenen Getreidekulturen, beispielsweise Weizen, Roggen u.a. sowie von Graupenkulturen und Samenträgern von Hülsen- und Getreidefrüchten angewendet werden.

### Zugrundeliegender Stand der Technik

Im bekannten Dreschwerk eines Axial-Mähdreschers führt der längsliegende Rotor gleichzeitig den Drusch der ankommenden Masse und deren Verschiebung über die Dreschkorboberfläche auf einer spiralförmigen Bahn durch. Der Drusch erfolgt dank einer kombinierten Schlag- und Durchreibeinwirkung seitens der Arbeitsorgane des Rotors und der Dreschkorbleisten auf das Druschgut.

Durch mildere Verhältnisse beim Betrieb des Dreschwerks mit dem längsliegenden Rotor und dadurch, daß Schlageinwirkungen durch Durchreiben ersetzt werden, kann der Grad der Kornbeschädigung erheblich vermindert werden, was für die Verbesserung von Saateigenschaften des Kornes und Verlängerung von Lagerungsfristen von zu Nahrungszwecken bestimmten Korn von besonderer Bedeutung ist.

Allerdings ergab es sich, daß neben diesen Vorteilen das Dreschwerk eines Axial-Mähdreschers mit dem längs liegenden Rotor einen charakteristischen Nachteil hat, der darin besteht, daß das ausgedroschene und durch den Dreschkorb hindurchgeführte Korn- Spreu-Kurzstrohgemisch relativ zu der Längsachse des Rotors nach einer Seite verschoben wird, wodurch die Reinigungseinrichtung über ihre Breite ungleichmäßig beschickt wird, was zum Kornverlust während Reinigung und zu einer Verringerung der Arbeitsleistung des Mähdreschers insgesamt führt. Dieser Nachteil ist dadurch ˇ bedingt,daß das Druschgut, indem es die Druschzone auf einer schraubenförmigen Bahn passiert, einer mehrfachen Einwirkung seitens der Arbeitsorgane des Rotors und der Dreschkorbleisten unterworfen wird, deren Intensität ungleichmäßig ist und von der Dreschspaltgröße abhängt. Die Durchsiebungsgeschwindigkeit des Korn-Spreu-Kurzstrohgemisches durch den Dreschkorbdurchgangsquerschnitt ist verschieden. Infolge eines sind in der Austrittsrichtung verringernden Dreschspaltes erhöht sich die Bewegungsgeschwindigkeit des Druschgutes auf dem Dreschkorb. Unter der Fliehkrafteinwirkung kommt es zu einer Schichtausdehnung, was ein Abscheiden des Korn-Spreu-Kurzstrohgemisches durch den Dreschkorb hindurch fördert. Durch die relative Verschiebung von dichter werdenden Schichten im verkleinerten Dreschspalt und deren aktive Zusammenwirkung mit den Dreschkorbleisten wird der Dresch-und Abscheidungsprozeß am Dreschkorbaustritt intensiviert. Darüber hinaus wirken auf das dank der Fliehkrafteinwirkung durch den Dreschkorb hindurchgeführte Korn-Spreu-Kurzstrohgemisch zwei der Richtung nach verschiedene Kräfte ein: die Schwerkraft und eine entlang einer Tangente an die Bewegungsbahn des Druschgutes auf einem Kreisbogen gerichtete Kraft. Die ungleichmäßige Verteilung des durch den Dreschkorb hindurchgeführten Korn-Spreu-Kurzstrohgemisches führt zur ungleichmäßigen Beschickung des Reinigungseinrichtungssiebes, was die Funktion der Reinigungsvorrichtung beeinträchtigt und die Gesamtleistung des Mähdreschers verringert. Darüber hinaus befindet sich das Druschgut während seiner Bewegung im Dreschspalt in einem auf dem gesamten Dreschkorbbogen zusammengedrückten Zustand, was das Abscheiden des ausgedroschenen Korn-Spreu-Kurzstrohgemisches durch den Dreschkorb hindruch erschwert und die Dreschfähigkeit der Arbeitsorgane des Rotors vermindert.

Bekannt ist ein Axial-Mähdrescher (siehe die US-PS Nr. 3 982 549, Kl. AOI F 12/20), in dem das Dreschwerk einen umlaufenden Rotor enthält, der entlang der Bewegungsrichtung des Mähdreschers in einem feststehenden zylindrischen Gehäuse untergebracht ist, dessen Oberteil mit Spiralförmigen Leitrippen an dessen Innenfläche und dessen Unterteil in der Dreschzone mit einem auswechselbaren Dreschkorb ausgestattet ist.

Ein Nachteil des beschriebenen Dreschwerks besteht darin, daß sein Dreschkorb eine niedrige Dreschfähigkeit besitzt. Dadurch, daß sich das Druschgut auf dem gesamten Dreschkorbbogen in einem zusammengedrückten Zustand befindet, wird das Abscheiden des ausgedroschenen Korn-Spreu-Kurzstrohgemisches durch den Dreschkorb hindurch erschwert und demgemäß auch die Dreschfähigkeit der Arbeitsorgane des Rotors herabgesetzt, wobei infolge eines kleinen Umschlingungswinkels, unter welchem der Dreschkorb den Rotor umgibt, auch das Durchsatzvermögen des Dreschwerkes verringert wird. Hierbei wirken sich die bei den Axial-Mähdreschern bekannten Faktoren wie die relativ zu der Längsachse des Rotors einseitige Verschiebung des ausgedroschenen und durch den Dreschkorb hindruchgeführten Korn-Spreu-Kurzstrohgemisches und die Verteilung desselben über die Breite des Reinigungseinrichtungssiebes in einer ihrer Dicke nach ungleichmäßigen Schicht auf die Funktionsgüte der Reinigungseinrichtung nachteilig aus und setzen die gesamte Arbeitsleistung des Mähdreschers herab.

Bei ein und demselben längsliegenden Rotor, aber mit diesen Rotor unter verschiedenen Winkeln umschlingenden Dreschkörben sind die Drusch- und Abscheideeffektivität sowie das Durchsatzvermögen des Dreschwerkes in dem Fall höher, wenn der Dreschkorb den Rotor unter einem großen Winkel umschlingt und die Durchsiebungsgeschwindigkeit des Korn-Spreu-Kurzstrohgemisches durch den Dreschkorb hindurch sowie die Gleich mäßigkeit der breitenmäßigen Beschickung der Reinigungseinrichtung von der Dreschspaltgröße abhängen. Jedoch wird mit der Vergrößerung des Umschlingungswinkels des Rotors durch den Dreschkorb um mehr als 120˚ die Spaltendifferenz zwischen dem Rotor und dem Dreschkorb bei verschiedenen Lagen des letzteren immer größer, was den normalen Druschvorgang im Dreschwerk stört und den Einsatz von besonderen sektionierten Dreschkörben mit einem komplizierten Aufhangungs- und Regelungsschema derselben erfordert.

Eine der Bedingungen für die einwandfreie Funktion der Reinigungseinrichtung sowohl beim herkömmlichen, wie auch beim Axial-Mähdrescher besteht in der gleichmäßigen Züführung des Korn-Spreu-Kurzstrohgemisches in einer der Dicke nach gleichmäßigen Schicht. Eine der Dicke nach ungleichmäßiger Schicht des Korn-Spreu-Kurzstrohgemisches, die sich über die Siebarbeitsfläche bewegt, wird von dem durch den Reinigungseinrichtungslüfter erzeugten Luftstrom nicht voll durchblasen, wodurch das nicht herausgeschüttelte Korn gemeinsam mit der Spreu den Mähdrescher verläßt, was die gesamte Arbeitsleistung desselben verringert.

Bekannt ist ferner ein weiterer Axial-Mähdrescher (siehe die US-PS Nr. 4 177 820, Kl. AOI F 12/20) mit einem Dreschwerk, in dem der Rotor mit einem ihn von oben umfassenden feststehenden zylindrischen Gehause und ihn von unten umfassenden auswechselbaren Dreschkorb gegen eine der vertikalen wande des Mähdrescherkörpers nach der zur Umlaufrichtung des Rotors entgegengesetzten Seite hin verschoben ist. An der gegenüberliegenden vertikalen Mähdrescherkörperwand ist ein Leitblech mit einem regelbaren Ablenkungswinkel angebracht. Allerdings ergab es sich, daß die Anordnung eines bzw. mehrerer Leitbleche ( an den beiden vertikalen Wänden) die Ableitung und Zusammenfassung des überwiegenden Teils der durch den Dreschkorb hindurchgeführten Druschprodukte in der Nähe des Längssymmetrieachse des Förderbandes zwar erleichtert, aber keine ausreichenden Bedingungen für die gleichmäßige Verteilung derselben über die Breite des Reinigungseinrichtungssiebes schafft. Ein weiterer Nachteil dieses Dreschwerkes besteht in einer niedrigen Dreschfähigkeit des Dreschkorbes, die dadurch bedingt ist, daß sich das Druschgut auf dem gesamten Dreschkorbbogen in einem zusammengedrückten Zustand befindet, was das Abscheiden des ausgedroschenen Korn-Spreu-Kurzstrohgemisches erschwert, die Dreschfähigkeit der Arbeitsorgane des Rotors verringert und infolge eines geringen Umschlingungswinkels des Rotors durch den Dreschkorb auch das Durchsatzvermögen des Dreschwerkes vermindert.

Also besitzen die beschriebenen bekannten Ausführungsformen der Dreschwerke eine niedrige Dresch-und Abscheidefähigkeit und können keine ausreichenden Bedingungen für eine gleichmäßige Dickenverteilung des Korn-Spreu-Kurzstrohgemisches auf dem Reiningungseinrichtungssieb gewährleisten. Die Funktionsgüte der Reiningungseinrichtung wird herabgemindert, was unbegründete Kornverluste hinter dem Mähdrescher verursacht und die Arbeitsleistung desselben insgesamt verringert.

Der vorliegenden Erfindung liegt die Aufgabe zugrunde, einen solchen Dreschkorb für ein Dreschwerk zu schaffen, dessen Konstruktion es gestattet, die Drusch-und Abscheideeffektivität auf dem gesamten Umschlingungswinkel des Rotors durch den Dreschkorb zu erhöhen und das zu verarbeitende Korn-Spreu-Kurzstrohgemisch über die gesamte Dreschkorbfläche gleichmäßig zu verteilen.

Die gestellte Aufgabe wird dadurch gelöst, daß im Dreschwerk eines Axial-Mähdreschers, enthaltend einen umlaufenden Rotor, der entlang der Bewegungsrichtung des Mähdreschers in einem feststehenden zylinderischen Gehause untergebracht ist, wobei das Oberteil des letzteren mit spiralförmigen Leitrippen an dessen Innenfläche, sein Unterteil aber in der Druschzone mit einem auswechselbaren Dreschkorb ausgestattet ist, erfindungsgemäß der Dreschkorb aus mehreren selbständigen Abschnitten ausgeführt ist, die sich beidseits der Rotorlängsachse befinden, wobei der in der Umlaufrichtung des Rotors erste Dreschkorbabschnitt in bezug auf den Rotor starr befestigt, der zweite Abschnitt aber in bezug auf den ersten Abschnitt gelenkig befestigt ist und eine Vorrichtung zur Regelung des Dreschspaltes am Austritt hat.

Die erfindungsgemäße Konstruktion des Dreschkorbes eines Dreschwerkes erfordert bei beträchtlicher Vergrößerung des Umschlingungswinkels des Rotors durch den Dreschkorb kein kompliziertes Aufhängungs- und Regelungsschema desselben, erhöht die Drusch- und Abscheideeffektivität sowie das Durchsatzvermögen des Dreschwerkes.

In einer weiteren Ausführungsform der Erfindung ist der in der Umlaufrichtung des Rotors erste Dreschkorbabschnitt in bezug auf den zweiten Abschnitt in der angrenzenden Zone stufenförmig angeordnet, wobei auf dem ersten Abschnitt der Dreschspalt in der angrenzenden Zone kleiner als auf dem zweiten Abschnitt ist.

Durch diese Dreschkorbkonstruktion wird die Drusch- und Abscheideeffektivität in jedem der Dreschkorbabschnitte erhöht, und das durch den Dreschkorb hindurchgeführte Korn-Spreu-Kurzstrohgemisch kann über die Breite des Reinigungseinrichtungssiebes gleichmäßiger verteilt werden. Hierbei sind in der Dreschkorbkonstruktion folgende Faktoren berücksichtigt wie die Durchsiebungsgeschwindigkeit des Korn-Spreu-Kurzstrohgemisches durch den Dreschkorb hindurch auf dem gesamten Umschlingungswinkel des Rotors durch den Dreschkorb; die Einwirkungsintensität der Arbeitsorgane des Rotors und der Dreschkorb leisten auf das Druschgut je nach der Dreschspaltgröße; der Einfluß ihrer Größe und der Richtung nach verschiedener Kräften, die auf das Korn-Spreu-Kurzstrohgemisch infolge der angreifenden Fliehkraft einwirken; die relativ zu der Rotorlängsachse einseitige Verschiebung des durch den Dreschkorb hindurchgeführten Korn-Spreu-Kurzstrohgemisches über die Breite der Reinigungseinrichtung.

Hierbei wird die Funktion der Reinigungseinrichtung stabilisiert, wodurch die Gesamtkornverluste hinter dem Mähdrescher vermindert werden und demzufolge auch die Arbeitsleistung desselben gesteigert wird.

In der bevorzugten Ausführungsform der Erfindung kann der in der Umlaufrichtung des Rotors erste Dreschkorbabschnitt in bezug auf den zweiten Abschnitt in der angrenzenden Zone mit einem sich in Richtung der axialen Druschgutverschiebung, zunehmenden Dreschspalt angeordnet sein.

Diese konstruktive Dreschkorbausführung gestattet es, den Kornbeschädigungsgrad beträchtlich zu vermindern, was für die Verbesserung von Saateigenschaften des Kornes und Verlängerung von Lagerungsfristen von zu Nahrungszwecken bestimmtem Korn von besonderer Bedeutung ist.

## Kurze Beschreibung der Zeichnungen

Weitere Ziele und Vorteile der vorliegenden Erfindung sind aus der nachfolgenden ausführlichen Beschreibung einer beispielsweisen Ausführung derselben anhand von den beiliegenden Zeichnungen verständlich; in den Zeichnungen zeigt:

Fig. 1 - ein Dreschwerk eines Axial-Mähdreschers, im Querschnitt;

Fig. 2 - eine Ausführungsform des Dreschkorbes, in der Axonometrie.

## Beste Ausführungsform der Erfindung

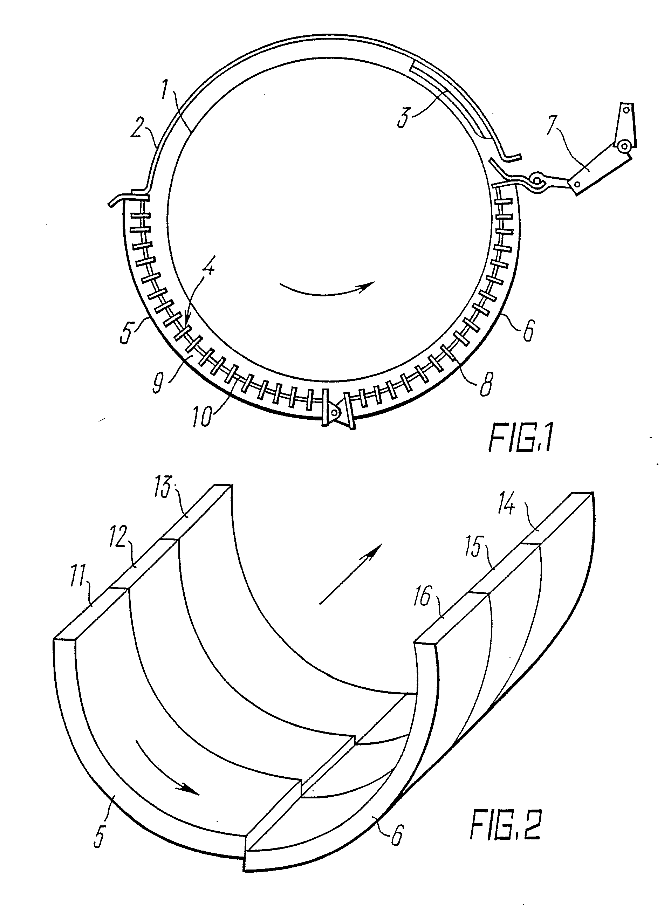

In Fig. 1 ist ein Dreschwerk eines Axial-Mähdreschers dargestellt, das einen Rotor 1 enthält, der in einem feststehenden zylindrischen Gehäuse 2 untergebracht ist, dessen Oberteil mit spiralförmigen Leitrippen an dessen Innenfläche, dessen Unterteil aber in der Dreschzone mit einem auswechselbaren Dreschkorb 4 ausgestattet ist, der in bezug auf den Rotor 1 in der Umlaufrichtung desselben unter Belassen eines keilförmigen Spaltes angeordnet ist.

Der auswechselbare Dreschkorb 4 ist aus einem in bezug auf den Rotor 1 unbeweglichen Abschnitt 5 und einem beweglichen Abschnitt 6 ausgeführt, der mit einem seiner Enden am Abschnitt 5 in der Nachbarzone gelenkig befestigt und durch sein anderes Ende mit einer Vorrichtung 7 zur Regelung des Dreschspaltes am Austritt verbunden ist, die eine beliebige bekannte Konstruktion haben kann.

Beim Ernten von Ährengräsern besitzt die Arbeitsfläche des Dreschkorbes 4 eine bekannte Gitterform, die durch einen Satz von Längsleisten 8 und Querleisten 9 sowie Stäben 10 gebildet ist.

Beim Ernten von Gräsersamenträgern muß der auswechselbare Dreschkorb 4 eine Arbeitsfläche mit zur aktiven Ausreibung und Abscheidung bestimmten Elementen haben.

Der Abschnitt 5 des Dreschkorbes 4 kann in einer zum Abschnitt 6 benachbarten Zone stufenförmig und mit einem als im Abschnitt 6 geringeren Dreschspalt angeordnet sein.

Wie aus Fig. 2 ersichtlich, ist der Abschnitt 5 des Dreschkorbes 4 in der zum Abschnitt 6 benachbarten Zone mit einem in Richtung der axialen Druschgutverschiebung zunehmenden Dreschspalt angeordnet.

Zur einfacheren Handhabung beim Auswechseln einzelner Abschnitte des auswechselbaren Dreschkorbes 4 kann der letztere in Gestalt von abnehmbaren Sektionen 11 bis 16 (Fig. 2) ausgeführt sein, die relativ zueinander ähnlich wie die im vorstehenden beschriebenen Abschnitte des Dreschkorbes 4 ebenfalls stufenförmig angerodnet sind.

Das Dreschwerk arbeitet auf folgende Weise.

Das in das Dreschwerk kommende Druschgut wird einer mehrfachen Einwirkung seitens der Arbeitsorgane des Rotors 1 und der Leisten 8 des Dreschkorbes 4 (Fig. 1) unterworfen, deren Intensität verschieden ist und von der Größe des Dreschspaltes zwischen dem Rotor 1 und den Abschnitten 5 und 6 des Dreschkorbes 4 abhängt.

Die spiralförmigen Leitrippen 3 des Gehäuses 2 sorgen dafür, daß notwendige Bedingungen zur axialen und schraubenförmigen Verschiebung des Druschgutes in der Druschzone, geschaffen werden.

Die Durchschiebungsgeschwindigkeit des Korn-Spreu-Kurzstrohgemisches durch den Dreschkorb 4 relativ zu der Längsachse des Rotors 1 ist verschieden. Die Durchsiebungsgeschwindigkeit ist höher in dem sich veringernden Dreschspalt infolge der ansteigenden Bewegungsgeschwindigkeit des Druschgutes über den Dreschkorb 4 zum Austritt hin, wodurch ein schichtenweises Auseinanderziehen des Druschgutes vor sich geht und eine aktive Zusammenwirkung desselben mit den Leisten 8 des Dreschkorbes 4 stattfindet. Bei der Bewegung des Druschgutes in der Richtung, in der der Dreschspalt größer wird, verlangsamt sich die Bewegungsgeschwindigkeit desselben in den Abschnitten 5 und 6 des Dreschkorbes, die Druschgutschicht dehnt sich aus, wird lockerer, so daß ihr Durchlaßvermögen vergrößert wird, und bei der nachfolgenden Zusammenwirkung dieses Korn-Spreu-Kurzstrohgemisches mit dem Rotor 1 findet ein intensives Herausschütteln des Kornes aus dem Korn-Spreu-Kurzstrohgemisch statt und wird das Abscheiden des letzteren durch den Dreschkorb 4 verbessert.

Die Ausführung des Dreschkorbes 4 aus den Abschnitten 5 und 6, die in bezug auf den Rotor 1 unter Belassen eines keilförmigen Dreschspaltes in jedem der Abschnitte in der Umlaufrichtung des Rotors angeordnet sind, erhöht die Drusch- und Abscheideeffektivität in jedem der genannten Abschnitte des Dreschkorbes 4 auf dem gesamten Umschlingungswinkel des Rotors 1 durch den Dreschkorb 4.

Da die Einwirkungsintensität auf das Druschgut entlang dem Bogen der Abschnitte 5 und 6 des Dreschkorbes 4 und die Durchsiebungsgeschwindigkeit des Korn-Spreu-Kurzstrohgemisches durch den Dreschkorb hindurch unterschiedlich sind, wird das Korn-Spreu-Kurzstrohgemisch über die gesamte Dreschkorbfläche gleichmäßig verteilt.

Eine gleichmäßigere Beschickung des Reinigungseinrichtungssiebes über dessen Breite stabilisiert die Funktion der Reinigungseinrichtung, wodurch die Kornverluste verringert werden und die Arbeitsleistung des Mähdreschers erhöht wird.

Industrielle Anwendbarkeit

Das Dreschwerk eines Axial-Mähdreschers in der erfindungsgemäßen Konstruktion gewährleistet sein hohes Durchsatzvermögen, minimale Kornverluste beim Ernten und gestattet es, das erfindungsgemäße Dreschwerk beim Ernten auf großen Produktionsflächen mit verschiedenem Sortiment von Erntekulturen einzusetzen.

**Ansprüche**

1. Dreschwerk eines Axial-Mähdreschers, das einen umlaufenden Rotor (1) enthält, der entlang der Bewegungsrichtung des Mähdreschers in einem feststehenden zylindrischen Gehäuse (2) untergebracht ist, dessen Oberteil mit spiralförmigen Leitrippen (3) an dessen Innenfläche, dessen Unterteil aber mit einem auswechselbaren Dreschkorb (4) ausgestattet ist, dadurch **gekennzeichnet,** daß der Dreschkorb (4) aus mehreren selbständigen Abschnitten (5 und 6) ausgeführt ist, die sich beidseits der Längsachse des Rotors (1) befinden, wobei der in der Umlaufrichtung des Rotors (1) erste Abschnitt (5) des Dreschkorbes (4) in bezug auf den Rotor (1) starr befestigt ist, während der zweite Abschnitt (6) in bezug auf den ersten Abschnitt (5) gelenkig befestigt ist und eine Vorrichtung (7) zur Regelung des Dreschspaltes am Austritt hat.

2. Dreschwerk eines Axial-Mähdreschers nach Anspruch 1, dadurch **gekennzeichnet,** daß der in der Umlaufrichtung des Rotors (1) erste Abschnitt (5) des Dreschkorbes (4) in bezug auf den zweiten Abschnitt (6) in der angrenzenden Zone stufenförmig angeordnet ist, wobei auf dem ersten Abschnitt (5) der Dreschspalt in der angrenzenden Zone kleiner als auf dem zweiten Abschnitt (6) ist.

3. Dreschwerk eines Axial-Mähdreschers nach Ansprüchen 1 und 2, dadurch **gekennzeichnet,** daß der in der Umlaufrichtung des Rotors (1) erste Abschnitt (5) des Dreschkorbes (4) in bezug auf den zweiten Abschnitt (6) in der angrenzenden Zone mit einem sich in Richtung der axialen Druschgutverschiebung vergrößernden Dreschspalt angeordnet ist.

*FIG.1*

*FIG.2*

# INTERNATIONAL SEARCH REPORT

International Application No PCT/SU 87/00094

## I. CLASSIFICATION OF SUBJECT MATTER (if several classification symbols apply, indicate all) *

According to International Patent Classification (IPC) or to both National Classification and IPC

IPC⁴    A01F 7/06, 12/26

## II. FIELDS SEARCHED

### Minimum Documentation Searched 7

| Classification System | Classification Symbols |
|---|---|
| IPC⁴ | A01F 7/06, 12/18, 12/20, 12/26 |

### Documentation Searched other than Minimum Documentation
to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| X | SU, A1, 1268130 (Golovnoe spetsializirovannoe konstruktorskoe bjuro po mashinam dlya uborki zernovykh kultur i samokhodnykh shassi) 7 November 1986 (07.11.86)  see column 2,lines 14-33, column 3,lines 1-5,figures 2,3 | 1 |
| Y | DE, C, 84358 (C.F. RICHTER IN BRANDENBURG A.H.)  6 December 1895 (06.12.1895) see page 1,right column,figures 1-5 | 1 |
| Y | SU, A1, 641914 (Vsesojuzny nauchno-issledovatelsky institut risa) 18 January 1979(18.01.79) see column 2,lines 8-18,column 3,lines 21-27,the claims,the drawing | 2 |
| X | SU, A1, 1130243 (V.S. Fadeev et al.) 23 December 1984 (23.12.84) see the abstract | 2 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 10 February 1988 (10.02.88) | 28 April 1988 (28.04.88) |

| International Searching Authority | Signature of Authorized Officer |
|---|---|
| ISA/SU | |

Form PCT/ISA/210 (second sheet) (January 1985)

International Application No. PCT/SU 87/00094

| III. DOCUMENTS CONSIDERED TO BE RELEVANT (CONTINUED FROM THE SECOND SHEET) | | |
|---|---|---|
| Category * | Citation of Document, with indication, where appropriate, of the relevant passages | Relevant to Claim No |
| A | DE, C, 943016 (Standardwerk Wilhelm Schulze K.G.) 9 May 1956 (09.05.56) see page 2, lines 104-112, figures 1-4 | 3 |